# EUROPÄISCHE PATENTSCHRIFT

(11) **EP 3 678 881 B1**
(45) Veröffentlichungstag und Bekanntmachung des Hinweises auf die Patenterteilung: **09.06.2021**
(21) Anmeldenummer: 18769116.7
(22) Anmeldetag: 05.09.2018
(51) Int. Cl.: B60K 6/48, B60K 6/36, B60K 6/365, B60K 6/547, F16H 3/00, F16H 3/089

(54) **HYBRIDANTRIEBSSTRANG FÜR EIN HYBRIDGETRIEBENES KRAFTFAHRZEUG**
HYBRID DRIVE TRAIN FOR A HYBRID MOTOR VEHICLE
GROUPE MOTOPROPULSEUR HYBRIDE D'UN VÉHICULE AUTOMOBILE À PROPULSION HYBRIDE

(30) Priorität: 06.09.2017 DE 102017215673
(43) Veröffentlichungstag der Anmeldung: 15.07.2020
(73) Patentinhaber: Audi AG, 85045 Ingolstadt (DE)
(72) Erfinder: HUMMEL, Steffen, 71287 Flacht (DE)
(86) Internationale Anmeldenummer: PCT/EP2018/073852
(87) Internationale Veröffentlichungsnummer: WO 2019/048468

(56) Entgegenhaltungen:
- DE-A1-102010 008 754
- DE-A1-102015 201 458
- US-A1- 2014 171 259

## Beschreibung

Die Erfindung betrifft einen Hybridantriebsstrang für ein hybridgetriebenes Kraftfahrzeug nach dem Oberbegriff des Patentanspruches 1.

Ein solcher Hybridantriebsstrang kann einen Triebstranggenerator, etwa eine 48V-Elektromaschine, aufweisen, die für einen rein elektromotorischen Fahrbetrieb sowie für eine Rekuperation ausgelegt ist. Die rekuperierte Energie kann gegebenenfalls über das Fahrzeug-Bordnetz zum Beispiel für einen elektronischen Klimakompressor abrufbar sein.

Aus der DE 10 2012 203 365 A1 ist ein Hybridantriebsstrang mit einer Elektromaschine und einer Brennkraftmaschine bekannt. Deren Kraftabgabewelle treibt über zwei Trennkupplungen einer Doppelkupplung alternierend auf eine erste Eingangswelle und auf eine dazu koaxiale zweite Eingangswelle eines Doppelkupplungsgetriebe ab, mit denen jeweils ein Teilgetriebe aktivierbar ist. Auf den beiden Eingangswellen und einer dazu achsparallelen gemeinsamen Abtriebswelle sind in Radebenen jeweils Fest- und Loszahnräder angeordnet, die unter Bildung von Gangstufen zu Zahnradsätzen zusammengefasst sind. In den Zahnradsätzen sind die Loszahnräder mittels Schaltelementen mit den obigen Wellen koppelbar. Die Elektromaschine kann über ein Vorgelege direkt auf die Abtriebswelle wirken. Zudem ist zwischen der Elektromaschine und der damit zusammenwirkenden Abtriebswelle ein elektromaschinenseitiges Schaltelement zwischengeschaltet. Das elektromaschinenseitige Schaltelement koppelt in einer ersten Schaltstellung die Elektromaschine mit der Abtriebswelle des Doppelkupplungsgetriebes. In einer Neutralstellung des Schaltelementes ist dagegen die Elektromaschine trieblich vom Doppelkupplungsgetriebe entkoppelt.

Zudem weist das Doppelkupplungsgetriebe in der DE 10 2012 203 365 A1 weitere Schaltelemente auf, mit deren Hilfe die Elektromaschine mit der ersten und zweiten Eingangswelle und/oder mit weiteren Vorgelegewellen des Doppelkupplungsgetriebes koppelbar ist.

Aus der US 2014/171 259 A1 ist ein gattungsgemäßes, elektrisches Hybridmodul für ein Doppelkupplungsgetriebe bekannt. Aus der DE 10 2010 008 754 A1 ist ein Antriebssystem für ein Kraftfahrzeug bekannt. Aus der DE 10 2015 201 458 A1 ist ein Hybrid-Antriebsstrang für ein Kraftfahrzeug bekannt.

Die Aufgabe der Erfindung besteht darin, einen Hybridantriebsstrang bereitzustellen, bei dem die Elektromaschine im Vergleich zum Stand der Technik baulich einfacher sowie bauraumgünstiger in unterschiedlicher Weise mit dem Doppelkupplungsgetriebe koppelbar ist.

Die Aufgabe ist durch die Merkmale des Anspruches 1 gelöst. Bevorzugte Weiterbildungen der Erfindung sind in den Unteransprüchen offenbart.

Gemäß dem Patentanspruch 1 kann das elektromaschinenseitige Schaltelement nicht nur in einer ersten Schaltstellung die Elektromaschine mit der Abtriebswelle koppeln sowie in einer Neutralstellung die Elektromaschine vom Doppelkupplungsgetriebe entkoppeln. Zusätzlich ist das elektromaschinenseitige Schaltelement auch in eine zweite Schaltstellung schaltbar, in der die Elektromaschine mit einer der Eingangswellen (nachfolgend als elektromaschinenseitige Eingangswelle bezeichnet) gekoppelt ist und gleichzeitig von der Abtriebsseite des Doppelkupplungsgetriebes abgekoppelt ist.

Auf diese Weise ist die Elektromaschine sowohl radseitig (das heißt abtriebsseitig an die Abtriebswelle), antriebsseitig (das heißt an eine der Eingangswellen des Doppelkupplungsgetriebes) als auch komplett abkoppelbar an das Doppelkupplungsgetriebe anbindbar, und zwar konstruktiv einfach sowie bauraumgünstig mit nur genau einem Schaltelement.

In einer technischen Umsetzung kann das Vorgelege der Elektromaschine ein von sämtlichen Gangstufen separater Zahnradsatz sein, bevorzugt eine Planetengetriebestufe und/oder eine Stirnradstufe. Erfindungsgemäß ist das elektromaschinenseitige Schaltelement unmittelbar auf der Abtriebswelle angeordnet. Es ist außerdem erfindungsgemäß, wenn das elektromaschinenseitige Schaltelement in der Axialrichtung betrachtet aus seiner Neutralstellung beidseitig in die erste Schaltstellung schaltbar oder dazu gegenläufig in die zweite Schaltstellung schaltbar ist.

Erfindungsgemäß grenzt an dem elektromaschinenseitigen Schaltelement in der Axialrichtung unmittelbar eine, eine Gangstufe bildende, Radebene (nachfolgend als elektromaschinenseitige Radebene bezeichnet) an. Diese weist ein auf der Abtriebswelle drehgelagertes, abtriebsseitiges Loszahnrad auf. Das abtriebsseitige Loszahnrad der elektromaschinenseitigen Radebene ist für eine herkömmliche Gangschaltung mittels eines (ebenfalls auf der Abtriebswelle sitzenden) Gangschaltelementes mit der Abtriebswelle koppelbar.

Zusätzlich erfolgt mittels des abtriebsseitigen Loszahnrads der elektromaschinenseitigen Radebene auch eine Elektromaschinen-Anbindung an die elektromaschinenseitige (das heißt erste) Eingangswelle: In diesem Fall ist das abtriebsseitige Loszahnrad der elektromaschinenseitigen Radebene mittels des elektromaschinenseitigen Schaltelementes (befindet sich in der zweiten Schaltstellung) mit der Elektromaschine gekoppelt. Dabei ist es im Hinblick auf eine kompakte Anordnung bevorzugt, wenn das obige Gangschaltelement und das elektromaschinenseitige Schaltelement an axial gegenüberliegenden Seiten des abtriebsseitigen Loszahnrads der elektromaschinenseitigen Radebene positioniert sind.

In dem oben erwähnten Doppelkupplungsgetriebe sind das erste Teilgetriebe und das zweite Teilgetriebe bevorzugt in der Axialrichtung nebeneinander angeordnet. Das erste Teilgetriebe kann unter Zwischenlage des zweiten Teilgetriebes axial von der Doppelkupplung beabstandet sein. Die erste Eingangswelle kann in diesem Fall eine Eingangsvollwelle sein, die sich koaxial innerhalb der als Eingangshohlwelle ausgebildeten zweiten Eingangswelle erstreckt. Bevorzugt können dem ersten Teilgetriebe sämtliche ungerade Vorwärtsgänge zugeordnet sein, während dem zweiten Teilgetriebe sämtliche geraden Vorwärtsgänge zugeordnet sein können, die über entsprechende Schaltelemente schaltbar sind.

Beispielhaft kann das Doppelkupplungsgetriebe ein an sich bekanntes Sieben-Gangschaltgetriebe sein, bei dem exemplarisch die im ersten Teilgetriebe angeordnete Radebene für die siebte Gangstufe, für die fünfte Gangstufe, für die dritte Gangstufe oder für die erste Gangstufe als elektromaschinenseitige Radebene wirkt, die mit dem Vorgelege der Elektromaschine koppelbar ist.

Das elektromaschinenseitige Schaltelement kann bauraumgünstig zwischen einer in der Axialrichtung äußeren, eine Gangstufe bildenden Radebene (das heißt die elektromaschinenseitige Radebene) und dem Vorgelege der Elektromaschine angeordnet sein. In dem obigen Doppelkupplungsgetriebe können sämtliche Radebenen axial hintereinander angeordnet sein, wobei an einem axial äußeren Getriebeende die Doppelkupplung angeordnet ist und die Elektromaschine, gegebenenfalls mitsamt Vorgelege, an einem dazu gegenüberliegenden axial äußeren Getriebeende angeordnet sein kann.

Im Hinblick auf eine bauraumgünstige Anordnung ist es bevorzugt, wenn die Elektromaschine mit ihrer Elektromaschinenwelle koaxial zur elektromaschinenseitigen Eingangswelle oder koaxial zur gemeinsamen Abtriebswelle des Doppelkupplungsgetriebes angeordnet ist. Die Elektromaschinenwelle kann als eine Hohlwelle realisiert sein, die auf der elektromaschinenseitigen Eingangswelle oder auf der gemeinsamen Abtriebswelle koaxial gelagert ist.

Das Vorgelege kann in einer ersten Ausführungsvariante eine Planetengetriebestufe mit einem Sonnenrad sowie mit einem radial äußeren Hohlrad und zwischengeordneten Planetenrädern aufweisen.

Der umlaufende Rotor der Elektromaschine kann in gängiger Praxis über einen Antriebsflansch mit der Elektromaschinenwelle drehfest verbunden sein. Neben dem Antriebsflansch kann auch ein Sonnenrad des Vorgeleges-Planetengetriebes drehfest auf der Elektromaschinenwelle angeordnet sein. In diesem Fall kann das radial äußere Hohlrad der Planetengetriebestufe gehäusefest angeordnet sein und der, die Planetenräder tragende Steg mittels des elektromaschinenseitigen Schaltelementes entweder mit der elektromaschinenseitigen Eingangswelle oder mit der Abtriebswelle koppelbar sein.

Nachfolgend sind Ausführungsbeispiele der Erfindung anhand der beigefügten Figuren beschrieben.

Es zeigen:
- Figur 1: eine Getriebestruktur des Doppelkupplungsgetriebes gemäß einem ersten Ausführungsbeispiel;
- Figur 2 bis 4: jeweils Ansichten entsprechend der Figur 1 gemäß weiteren Ausführungsbeispielen der Erfindung.

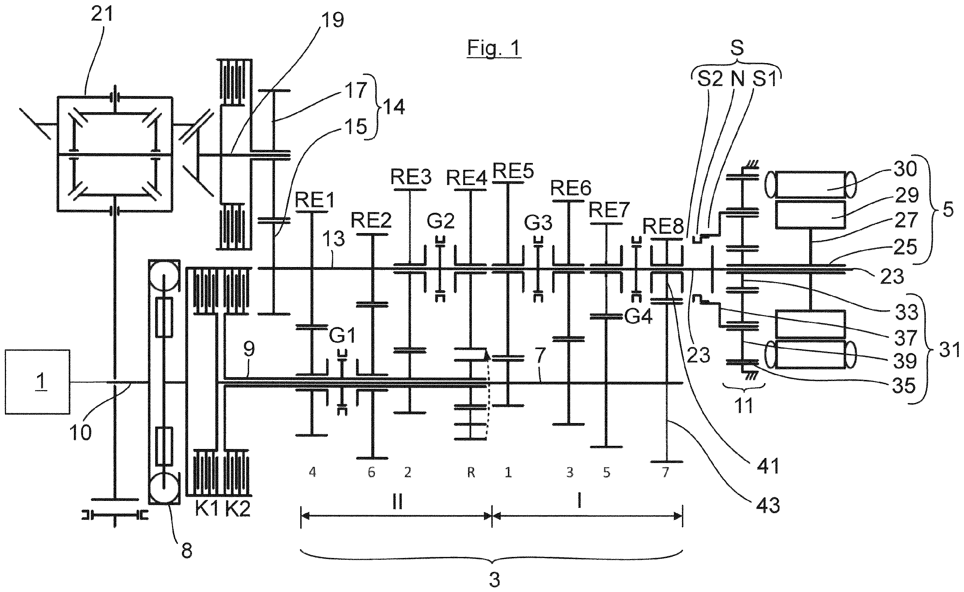

In der Figur 1 ist ein Hybridantriebsstrang für ein hybridgetriebenes Fahrzeug gezeigt, der sich im Wesentlichen aus einer Brennkraftmaschine 1, einem Doppelkupplungsgetriebe 3 und einer Elektromaschine 5 zusammensetzt. Das Doppelkupplungsgetriebe 3 weist eine erste Eingangswelle 7 und eine zweite Eingangswelle 9 auf, die koaxial angeordnet sind und die über zwei zum Beispiel hydraulisch betätigbare Lamellenkupplungen K1, K2 über einen vorgeschalteten Drehschwingungsdämpfer 8 alternierend mit einer Brennkraftmaschinenwelle 10 momentenübertragend verbindbar sind. Die erste Eingangswelle 7 ist in der Figur 1 als eine Vollwelle realisiert, die koaxial innerhalb der als Hohlwelle realisierten zweiten Eingangswelle 9 geführt ist.

Das Doppelkupplungsgetriebe 3 weist in der Figur 1 beispielhaft insgesamt sieben Vorwärtsgänge und einen Rückwärtsgang auf. Diese sind in Radebenen RE1 bis RE8 durch entsprechende Zahnradsätze mit jeweils einem Loszahnrad und einem Festzahnrad realisiert, die in bekannter Weise über insgesamt vier Gangschaltelemente G1 bis G4 (das heißt zum Beispiel Doppelsynchronkupplungen) schaltbar sind. Die abtreibenden Zahnräder der, die Gangstufen bildenden Radebenen RE1 bis RE8 sind allesamt auf einer gemeinsamen achsparallelen Abtriebswelle 13 angeordnet. Die Abtriebswelle 13 treibt über eine Zahnradstufe 14 mit Stirnzahnrädern 15, 17 eine Antriebswelle 19 eines Achsdifferenzials 21 an.

Mittels der ersten und zweiten Eingangswelle 7, 9 kann jeweils ein erstes Teilgetriebe I und ein zweites Teilgetriebe II des Doppelkupplungsgetriebes 3 aktiviert werden. Dem ersten Teilgetriebe I sind sämtliche ungeraden Vorwärtsgänge 1, 3, 5, 7 zugeordnet, während dem zweiten Teilgetriebe II sämtliche geraden Vorwärtsgänge 2, 4, 6 sowie ein Rückwärtsgang R zugeordnet sind. Entsprechend sind die ungeraden Vorwärtsgänge 1, 3, 5, 7 über die erste Eingangswelle 7 sowie mittels der ersten Trennkupplung K1 aktivierbar. Demgegenüber sind die geraden Vorwärtsgänge 2, 4, 6 des zweiten Teilgetriebes II sowie dessen Rückwärtsgang über die hohle zweite Eingangswelle 9 sowie mittels der zweiten Trennkupplung K2 aktivierbar.

Das erste Teilgetriebe I ist in der Figur 1, in der Axialrichtung betrachtet, unter Zwischenlage des Teilgetriebes II axial von der Doppelkupplung K1, K2 beabstandet, die in der Figur 1 am linken äußeren Getriebeende angeordnet ist. Am gegenüberliegenden rechten axial äußeren Getriebeende des Doppelkupplungsgetriebes 3 ist die Elektromaschine 5 positioniert. Der Elektromaschine 5 ist ein Vorgelege 11 für eine Drehmomentwandlung vorgelagert.

Wie aus der Figur 1 weiter hervorgeht, ist die Abtriebswelle 13 in der Axialrichtung betrachtet über das erste Teilgetriebe I hinaus mit einem Endstück 23 verlängert, auf dem eine als Hohlwelle realisierte Elektromaschinenwelle 25 koaxial gelagert ist. Die Elektromaschinenhohlwelle 25 ist über einen Antriebsflansch 27 mit einem Rotor 29 der Elektromaschine 5 drehfest in Verbindung, der wiederum mit einem Stator 30 der Elektromaschine 5 zusammenwirkt. In der Figur 1 weist das Vorgelege 11 der Elektromaschine 5 ein Planetengetriebe 31 auf, dessen Sonnenrad 33 drehfest auf der Elektromaschinenhohlwelle 25 angeordnet ist. Das radial äußere Hohlrad 35 ist gehäusefest gehalten, wobei ein die Planetenräder 39 tragender Steg 37 über ein, auf der Abtriebswelle 13 sitzendes elektromaschinenseitiges Schaltelement S entweder mit der ersten Eingangswelle 7 (nachfolgend auch als elektromaschinenseitige Eingangswelle bezeichnet) oder mit der Abtriebswelle 13 koppelbar oder vom Doppelkupplungsgetriebe 3 komplett entkoppelbar ist.

Wie aus der Figur 1 hervorgeht, ist das elektromaschinenseitige Schaltelement S aus seiner Neutralstellung N in Axialrichtung beidseitig entweder in eine erste Schaltstellung S1 oder gegenläufig dazu in eine zweite Schaltstellung S2 schaltbar. Das elektromaschinenseitige Schaltelement S ist in der Axialrichtung betrachtet zwischen dem Vorgelege 11 und einer unmittelbar angrenzenden Radebene RE8 (das heißt elektromaschinenseitige Radebene) positioniert, die in der Figur 1 die siebte Gangstufe bildet. Die elektromaschinenseitige Radebene RE8 weist ein auf der Abtriebswelle 13 drehgelagertes abtriebsseitiges Loszahnrad 41 auf, das mit einem antriebsseitigen Festzahnrad 43 auf der ersten (elektromaschinenseitigen) Eingangswelle 7 kämmt. Für eine herkömmliche Gangschaltung ist das abtriebsseitige Loszahnrad 41 mittels eines zugeordneten Gangschaltelementes G4 mit der Abtriebswelle 13 koppelbar.

In Doppelfunktion zu einer solchen herkömmlichen Gangschaltung ist das abtriebsseitige Loszahnrad 41 der elektromaschinenseitigen Radebene RE8 zusätzlich auch Bestandteil einer antriebsseitigen Elektromaschinen-Anbindung an die erste (elektromaschinenseitige) Eingangswelle 7. Für eine solche Elektromaschinen-Anbindung an die elektromaschinenseitige Eingangswelle 7 ist das elektromaschinenseitige Schaltelement S in seine zweite Schaltstellung S2 geschaltet, in der der Steg 37 des Planetengetriebes 31 des Vorgeleges 11 mit dem abtriebsseitigen Loszahnrad 41 der elektromaschinenseitigen Radebene RE8 gekoppelt ist.

Alternativ dazu ist in der ersten Schaltstellung S1 der Steg 37 des Planetengetriebes 31 des Vorgeleges 11 mit der Abtriebswelle 13 gekoppelt, wodurch eine abtriebsseitige Elektromaschinen-Anbindung an die Abtriebswelle 13 bereitgestellt ist.

Die oben definierte radseitige bzw. abtriebsseitige Elektromaschinen-Anbindung (in der Schaltstellung S1 des elektromaschinenseitigen Schaltelements S) weist die folgenden Vorteile auf: So ist eine optimale Übersetzung für die Rekuperation gewährleistet (Betriebspunkt der Elektromaschine 5 hinsichtlich Leistung und Wirkungsgrad über einen großen Geschwindigkeitsbereich). Zudem ist ein guter Wirkungsgrad für die Rekuperation gewährleistet (keine Schleppverluste der Trennkupplungen K1, K2 und der Eingangswellen 7, 9 des Doppelkupplungsgetriebes 3). Ferner ist ein Boost-Betrieb in einem niedrigen Drehmoment-Bereich ("low torque end") und eine Verbesserung der Spontanität im Zug, auch bei Zug-Rückschaltungen oder Kickdown und Mehrfachrückschaltungen gewährleistet. Außerdem ist bei der radseitigen Elektromaschinen-Anbindung ein energieeffizienter Fahrbetrieb gewährleistet, da nicht erforderliche Getriebe-Komponenten, etwa Ölpumpen, Steuergerät, Getriebehydraulik oder Schaltelemente deaktiviert (das heißt stromlos geschaltet) werden können. Ein weiterer Vorteil der obigen radseitigen Elektromaschinen-Anbindung ist die ständige Verfügbarkeit der Elektromaschine 5, das heißt die Aktivierung der Elektromaschine 5 ist nicht gebunden an den aktuellen Fahrgang im Doppelkupplungsgetriebe 3. Zudem ergibt sich kein Konflikt mit der Vorwahl der Gänge (auch wenn diese dann nicht geschaltet werden). Dadurch wird der nutzbare / verfügbare Zeitanteil des Triebstranggenerators nicht eingeschränkt. Ebenso wenig ergibt sich ein Konflikt mit der Kupplungsadaption, das heißt der nutzbare / verfügbare Zeitanteil des Triebstranggenerators wird nicht eingeschränkt. Ferner ergibt sich keine Beeinträchtigung der Kupplungsadaption (hohe Trägheit würde das Anlernen des Kisspoint der Kupplung K1, K2 erschweren).

Die oben definierte antriebsseitige Elektromaschinen-Anbindung (in der ersten Schaltstellung S2 des elektromaschinenseitigen Schaltelements S) weist die folgenden Vorteile auf: So ist mit der antriebsseitigen Elektromaschinen-Anbindung ein elektromotorischer Fahrbetrieb ermöglicht (zum Beispiel Parkpilot, Staupilot, elektrisches Kriechen). Zudem ist ein Boost-Betrieb im niedrigen Drehmomentbereich ("Boosten im low torque end") sowie eine Verbesserung der Spontanität bei Kickdown gewährleistet. Ferner ist eine optimale Übersetzung für die Darstellung der Fahrfunktionen (Betriebspunkt der Elektromaschine 5 hinsichtlich Drehmoment und Leistung bei niedrigen Fahrgeschwindigkeiten) ermöglicht. Außerdem ist ein Segel-Betrieb sowie ein Brennkraftmaschinen-Start und ein Brennkraftmaschinen-Zustart sowie ein Kaltstart ermöglicht. Mit der antriebsseitigen Elektromaschinen-Anbindung kann zudem eine Unterstützung bei der Synchronisierung im Doppelkupplungsgetriebe erfolgen. Darüber hinaus sind mehrere Anbindungsmöglichkeiten von der ersten Eingangswelle 7 an die Abtriebswelle 13 (über 1., 3. und 5.Gang) bereitgestellt.

Die Abkoppelung der Elektromaschine 5 vom Doppelkupplungsgetriebe 3 (in der Neutralstellung N des elektromaschinenseitigen Schaltelements S) weist die folgenden Vorteile auf: So muss die Übersetzung der Elektromaschinen-Anbindung nicht auf die Maximaldrehzahl der Brennkraftmaschine 1 ausgelegt werden, so dass sich kein Überdrehen der Elektromaschine 5 (1.Gang + Stufensprung 1-2) ergibt. Ferner kann das Doppelkupplungsgetriebe 3 wirkungsgradoptimal betrieben werden, da keine "bremsende" Trägheit in Betriebszuständen vorhanden ist, in denen das Fahrzeug die Elektromaschine 5 nicht benutzt (Autobahn, Batterie SOC-Halt, Kälte, Batterie leer). Außerdem ist der Fahrbetrieb energieeffizient, da keine Selbstsynchronisierung notwendig ist. Zudem ergibt sich eine Entlastung der Synchronisierung durch Entkoppelung der Trägheit, wenn die Elektromaschine 5 nicht verfügbar ist (SOC-Halt, Batterie leer, Kälte). Weiterhin ergibt sich ein verkürzter Bremsweg durch die Entkoppelung der Trägheit bei Vollbremsungen sowie eine Entlastung der Betriebsbremse durch Abkoppelung der Elektromaschinen-Trägheit (Batterie voll, Kälte). Darüber hinaus wird die Schaltbarkeit verbessert, das heißt, dass das Gangkratzen beim Durchschalten nach der Freiflugphase reduziert bzw. verhindert wird.

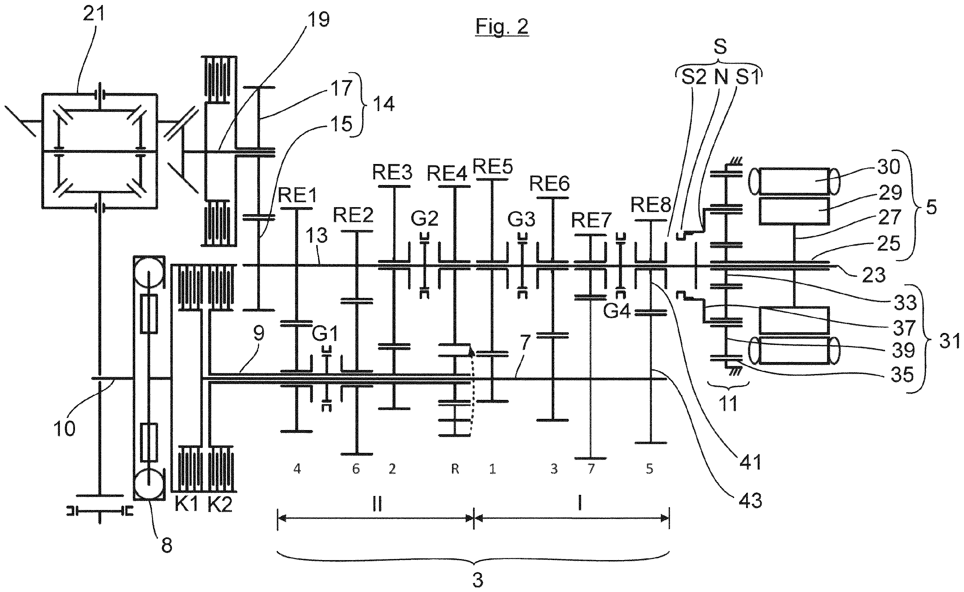

In der Figur 2 ist in einer Ansicht entsprechend der Figur 1 eine zweite Ausführungsvariante gezeigt, die im Wesentlichen identisch mit der in der Figur 1 gezeigten Getriebestruktur 1 ist. Im Unterschied zur Figur 1 bildet in der Figur 2 die elektromaschinenseitige Radebene RE8 nicht den siebten Gang, sondern vielmehr den fünften Gang, während die siebte Radebene RE7 den siebten Gang bildet. Das heißt das in der Figur 2 die siebte und fünfte Gangstufe lagemäßig ausgetauscht sind.

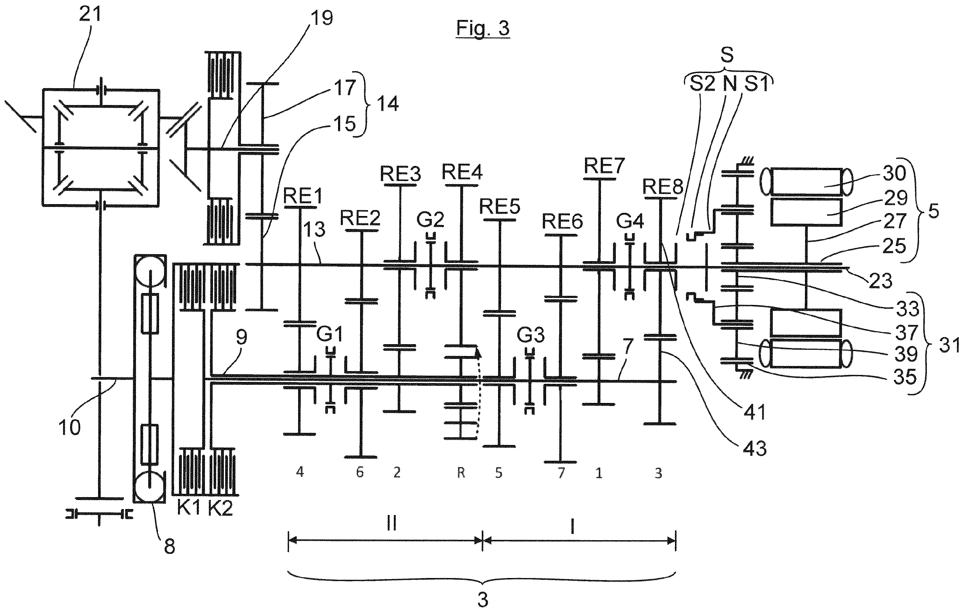

In der Figur 3 ist in einer Ansicht entsprechend der Figur 1 eine dritte Ausführungsvariante gezeigt, die im Wesentlichen identisch mit der in der Figur 1 gezeigten Getriebestruktur 1 ist. Im Unterschied zur Figur 1 bildet in der Figur 3 die elektromaschinenseitige Radebene RE8 nicht den siebten Gang, sondern vielmehr den dritten Gang, während die fünfte Radebene RE5 den fünften Gang bildet, die sechste Radebene RE6 den siebten Gang bildet und die siebte Radebene RE7 den ersten Gang bildet.

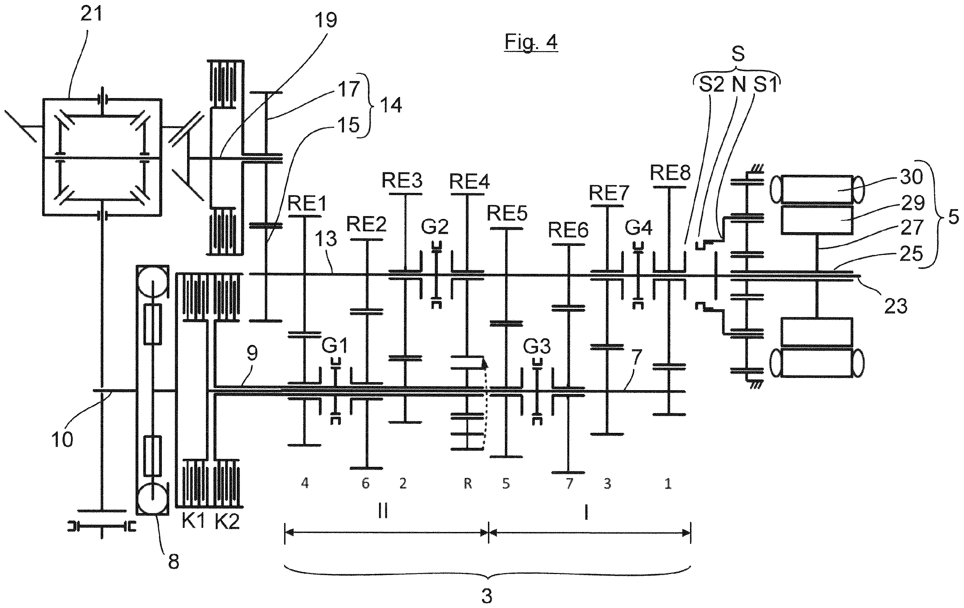

In der Figur 4 ist in einer Ansicht entsprechend der Figur 1 eine vierte Ausführungsvariante gezeigt, die im Wesentlichen identisch mit der in der Figur 1 gezeigten Getriebestruktur 1 ist. Im Unterschied zur Figur 1 bildet in der Figur 4 die elektromaschinenseitige Radebene RE8 nicht den siebten Gang, sondern vielmehr den ersten Gang, während die fünfte Radebene RE5 den fünften Gang bildet, die sechste Radebene RE6 den siebten Gang bildet und die siebte Radebene RE7 den dritten Gang bildet.

## Patentansprüche

1. Hybridantriebsstrang für ein hybridgetriebenes Fahrzeug, mit einer Elektromaschine (5) und einer Brennkraftmaschine (1), deren Kraftabgabewelle (10) über zwei Trennkupplungen (K1, K2) einer Doppelkupplung alternierend entweder auf eine erste Eingangswelle (7) oder auf eine dazu koaxiale zweite Eingangswelle (9) eines Doppelkupplungstriebes (3) abtreibt, wobei mit den Eingangswellen (7, 9) jeweils ein erstes und ein zweites Teilgetriebe (I, II) aktivierbar ist, und wobei auf den beiden Eingangswellen (7, 9) und einer dazu achsparallelen gemeinsamen Abtriebswelle (13) in Radebenen (RE1 bis RE8) Fest- und Loszahnräder angeordnet sind, die unter Bildung von Gangstufen (1 bis 7, R) zu Zahnradsätzen zusammengefasst sind, in denen die Loszahnräder mittels Gangschaltelementen (G1 bis G4) mit den Wellen (7, 9, 13) koppelbar sind, wobei die Elektromaschine (5) über ein Vorgelege (11) auf die Abtriebswelle (13) wirkt, wobei zwischen der Elektromaschine (5) und der damit zusammenwirkenden Abtriebswelle (13) ein elektromaschinenseitiges Schaltelement (S) zwischengeschaltet ist, das in einer ersten Schaltstellung (S1) die Elektromaschine (5) mit der Abtriebswelle (13) koppelt und in einer Neutralstellung (N) die Elektromaschine (5) von dem Doppelkupplungsgetriebe (3) entkoppelt, wobei das elektromaschinenseitige Schaltelement (S) in eine zweite Schaltstellung (S2) schaltbar ist, in der die Elektromaschine (5) mit einer (7) der Eingangswellen (7, 9) gekoppelt ist und von der Abtriebswelle (13) entkoppelt ist, und wobei das elektromaschinenseitige Schaltelement (S) auf der Abtriebswelle (13) angeordnet ist, und wobei das elektromaschinenseitige Schaltelement (S) aus seiner Neutralstellung (N) in Axialrichtung beidseitig entweder in seine erste Schaltstellung (S1) oder dazu gegenläufig in seine zweite Schaltstellung (S2) schaltbar ist, **dadurch gekennzeichnet, dass** an dem elektromaschinenseitigen Schaltelement (S) in Axialrichtung unmittelbar eine, eine Gangstufe der Gangstufen (1 bis 7, R) bildende elektromaschinenseitige Radebene (RE8) angrenzt, die ein auf der Abtriebswelle (13) gelagertes abtriebsseitiges Loszahnrad (41) aufweist, und dass in der zweiten Schaltstellung (S2) das abtriebsseitige Loszahnrad (41) der elektromaschinenseitigen Radebene (RE8) mit der Elektromaschine (5) gekoppelt ist, um eine Elektromaschinen-Anbindung an die eine (7) der Eingangswellen (7, 9) bereitzustellen.

2. Hybridantriebsstrang nach Anspruch 1, **dadurch gekennzeichnet, dass** das Vorgelege (11) einen von sämtlichen Gangstufen (G1 bis G4) separaten Zahnradsatz, das heißt eine Planetengetriebestufe (31) aufweist.

3. Hybridantriebsstrang nach Anspruch 1, **dadurch gekennzeichnet, dass** das abtriebsseitige Loszahnrad (41) der elektromaschinenseitigen Radebene (RE8) für eine Gangschaltung mittels eines zugeordneten Gangschaltelements (G4) mit der Abtriebswelle (13) koppelbar ist.

4. Hybridantriebsstrang nach einem der vorhergehenden Ansprüche, **dadurch gekennzeichnet, dass** das erste Teilgetriebe (I) und das zweite Teilgetriebe (II) in Axialrichtung nebeneinander angeordnet sind, und dass das erste Teilgetriebe (I) unter Zwischenlage des zweiten Teilgetriebes (II) axial von der Doppelkupplung (K1, K2) beabstandet ist, und/oder dass die eine (7) der Eingangswellen (7, 9) eine Vollwelle ist, die koaxial innerhalb der als Hohlwelle ausgebildeten zweiten Eingangswelle (9) angeordnet ist.

5. Hybridantriebsstrang nach Anspruch 4, **dadurch gekennzeichnet, dass** die Abtriebswelle (13) in axialer Verlängerung über das erste Teilgetriebe (I) hinaus mit einem Endstück (23) verlängert ist, auf dem das elektromaschinenseitige Schaltelement (S) sitzt, und dass das Endstück (23) in der ersten Schaltstellung (S1) des elektromaschinenseitigen Schaltelements (S) mit der Elektromaschine (5) gekoppelt ist.

6. Hybridantriebsstrang nach einem der vorhergehenden Ansprüche, **dadurch gekennzeichnet, dass** das elektromaschinenseitige Schaltelement (S) in axialer Flucht zwischen der elektromaschinenseitigen Radebene (RE8) und dem Vorgelege (11) der Elektromaschine (5) angeordnet ist, und/oder dass sämtliche Radebenen (RE1 bis RE8) axial hintereinander im Doppelkupplungsgetriebe (3) angeordnet sind, und dass die Doppelkupplung (K1, K2) an einem axial äußeren Getriebeende angeordnet ist und die Elektromaschine (5) am axial gegenüberliegenden äußeren Getriebeende angeordnet ist.

7. Hybridantriebsstrang nach einem der vorhergehenden Ansprüche, **dadurch gekennzeichnet, dass** die Elektromaschine (5) mit ihrer Elektromaschinenwelle (25) koaxial zur Abtriebswelle (13) angeordnet ist.

8. Hybridantriebsstrang nach einem der vorhergehenden Ansprüche, **dadurch gekennzeichnet, dass** das Vorgelege (11) eine Planetengetriebestufe (31) mit einem Sonnenrad (33) sowie einem radial äußeren Hohlrad (35) und zwischengeordneten Planetenrädern (39) aufweist.

9. Hybridantriebsstrang nach den Ansprüchen 5 und 7 oder 5, 7 und 8, **dadurch gekennzeichnet, dass** die Elektromaschinenwelle (25) eine Hohlwelle ist, die auf der Abtriebswelle (13), nämlich auf deren Endstück (23) koaxial gelagert ist.

10. Hybridantriebsstrang nach Anspruch 8 und 9, **dadurch gekennzeichnet, dass** das Sonnenrad (33) drehfest auf der Elektromaschinenwelle (25) angeordnet ist sowie das radial äußere Hohlrad (35) gehäusefest angeordnet ist, und dass in der ersten Schaltstellung (S1) des elektromaschinenseitigen Schaltelements (S) ein die Planetenräder (39) tragender Steg (37) mit der Abtriebswelle (13) gekoppelt ist, und dass in der zweiten Schaltstellung (S2) des elektromaschinenseitigen Schaltelements (S) der die Planetenräder (39) tragende Steg (37) mit dem abtriebsseitigen Loszahnrad (41) der elektromaschinenseitigen Radebene (RE8) gekoppelt ist.

## Claims

1. Hybrid drive train for a hybrid powered vehicle, comprising an electric motor (5) and an internal combustion engine (1), the power output shaft (10) of which acts alternately either on a first input shaft (7) or on a second input shaft (9), coaxial to the first, of a dual clutch transmission (3) via two separating clutches (K1, K2) of a dual clutch, wherein a first and a second sub-transmission (I, II) can be activated in each case by the input shafts (7, 9), wherein fixed and idler gears are arranged in wheel planes (RE1 to RE8) on the two input shafts (7, 9) and on a common output shaft (13) axially parallel to said input shafts, said fixed and idler gears being combined into gear sets which form gear stages (1 to 7, R) in which the idler gears can be coupled to the shafts (7, 9, 13) by gear-shifting elements (G1 to G4), wherein the electric motor (5) acts on the output shaft (13) optionally via an intermediate gear (11), wherein a shifting element (S) on the electric motor side is interposed between the electric motor (5) and the output shaft (13) which interacts therewith, said shifting element coupling the electric motor (5) to the output shaft (13) in a first shift position (S1) and decoupling the electric motor (5) from the dual clutch transmission (3) in a neutral position (N), wherein the shifting element (S) on the electric motor side can be shifted into a second shift position (S2) in which the electric motor (5) is coupled to one (7) of the input shafts (7, 9) and decoupled from the output shaft (13), and wherein the shifting element (S) on the electric motor side can be shifted from its neutral position (N) in the axial direction both ways, either into its first shift position (S1) or into its second shift position (S2) opposed to the first, **characterised in that** in the axial direction the shifting element (S) on the electric motor side directly adjoins a wheel plane (RE8) on the electric motor side forming one gear stage of the gear stages (1 to 7, R), which comprises an idler gear (41) on the output side mounted on the output shaft (13), and **in that** in the second shift position (S2) the idler gear (41) on the output side of the wheel plane (RE8) on the electric motor side is coupled to the electric motor (5) in order to provide an electric motor connection to one (7) of the input shafts (7, 9).

2. Hybrid drive train according to claim 1, **characterised in that** the intermediate gear (11) comprises a gear set which is separate from all of the gear stages (G1 to G4), that is to say a planetary gear stage (31).

3. Hybrid drive train according to claim 1, **characterised in that** the idler gear (41) on the output side of the wheel plane (RE8) on the electric motor side can be coupled to the output shaft (13) for a gear shift by means of an associated gear-shifting element (G4).

4. Hybrid drive train according to any of the preceding claims, **characterised in that** the first sub-transmission (I) and the second sub-transmission (II) are arranged next to each other in the axial direction, and **in that** the first sub-transmission (I) is axially spaced apart from the dual clutch (K1, K2) with the second sub-transmission (II) interposed, and/or **in that** one (7) of the input shafts (7, 9) is a solid shaft which is arranged coaxially inside the second input shaft (9) which is designed as a hollow shaft.

5. Hybrid drive train according to claim 4, **characterised in that** the output shaft (13) is prolonged in an axial prolongation beyond the first sub-transmission (I) by an end piece (23), on which the shifting element (S) on the electric motor side is mounted, and **in that** the end piece (23) is coupled to the electric motor (5) in the first shift position (S1) of the shifting element (S) on the electric motor side.

6. Hybrid drive train according to any of the preceding claims, **characterised in that** the shifting element (S) on the electric motor side is arranged flush in the axial direction between the wheel plane (RE8) on the electric motor side and the intermediate gear (11) of the electric motor (5), and/or **in that** all the wheel planes (RE1 bis RE8) are arranged axially one after the other in the dual clutch transmission (3), and **in that** the dual clutch (K1, K2) is arranged on an axially outer end of the transmission and the electric motor (5) is arranged on the axially opposite end of the transmission.

7. Hybrid drive train according to any of the preceding claims, **characterised in that** the electric motor (5) is arranged with its electric motor shaft (25) coaxial to the output shaft (13).

8. Hybrid drive train according to any of the preceding claims, **characterised in that** the intermediate gear (11) comprises a planetary gear stage (31) with a sun gear (33) and a radially outer ring gear (35) and planet gears (39) arranged in between.

9. Hybrid drive train according to claims 5 and 7 or 5, 7 and 8, **characterised in that** the electric motor shaft (25) is a hollow shaft which is mounted coaxially on the output shaft (13), especially on the end piece (23) thereof.

10. Hybrid drive train according to claims 8 and 9, **characterised in that** the sun gear (33) arranged non-rotatably on the electric motor shaft (25) and the radially outer ring gear (35) is fixed to the housing, and **in that**, in the first shift position (S1) of the shifting element (S) on the electric motor side, an arm (37) carrying the planet gears (39) is coupled to the output shaft (13), and **in that**, in the second shift position (S2) of the shifting element (S) on the electric motor side, the arm (37) carrying the planet gears (39) is coupled to the idler gear (41) of the wheel plane (RE8) on the electric motor side.

## Revendications

1. Chaîne cinématique hybride pour un véhicule à propulsion hybride, avec un moteur électrique (5) et un moteur à combustion interne (1), dont l'arbre de transfert de force (10) agit en sortie par l'intermédiaire de deux embrayages de séparation (K1, K2) d'un double embrayage en alternance soit sur un premier arbre d'entrée (7) soit sur un deuxième arbre d'entrée (9) coaxial par rapport à celui-ci, d'un mécanisme à double embrayage (3), dans laquelle respectivement un premier et un deuxième engrenage partiel (I, II) peuvent être activés avec les arbres d'entrée (7, 9), et dans laquelle sont disposées sur les deux arbres d'entrée (7, 9) et un arbre de sortie (13) commun axialement parallèle à ceux-ci, dans des plans de roue (RE1 à RE8), des roues dentées fixes et mobiles, qui sont regroupées en des jeux de roues dentées en formant des rapports (1 à 7, R), dans lesquels les roues dentées mobiles peuvent être couplées aux arbres (7, 9, 13) au moyen d'éléments de changement de vitesses (G1 à G4), dans laquelle le moteur électrique (5) agit sur l'arbre de sortie (13) par l'intermédiaire d'un non-tissé (11), dans laquelle un élément de changement de vitesses (S) côté moteur électrique est intercalé entre le moteur électrique (5) et l'arbre de sortie (13) coopérant avec celui-ci, lequel couple, dans une première position de changement de vitesses (S1), le moteur électrique (5) à l'arbre de sortie (13) et découple, dans une position neutre (N), le moteur électrique (5) de la transmission à double embrayage (3), dans laquelle l'élément de changement de vitesses (S) côté moteur électrique peut être commuté dans une deuxième position de changement de vitesses (S2), dans laquelle le moteur électrique (5) est couplé à un (7) des arbres d'entrée (7, 9) et est découplé de l'arbre de sortie (13), et dans laquelle l'élément de changement de vitesses (S) côté moteur électrique est disposé sur l'arbre de sortie (13), et dans laquelle l'élément de changement de vitesses (S) côté moteur électrique peut être commuté depuis sa position neutre (N) dans une direction axiale de part et d'autre soit dans sa première position de changement de vitesses (S1) soit, à l'inverse, dans sa deuxième position de changement de vitesses (S2), **caractérisée en ce qu'**un plan de roue (RE8) côté moteur électrique formant un rapport des rapports (1 à 7, R) jouxte directement dans la direction axiale l'élément de changement de vitesses (S) côté moteur électrique, qui présente une roue dentée mobile (41) côté sortie montée sur l'arbre de sortie (13), et que dans la deuxième position de changement de vitesses (S2), la roue dentée mobile (41) côté sortie du plan de roue (RE8) côté moteur électrique est couplée au moteur électrique (5) pour fournir un rattachement de moteurs électrique à l'un (7) des arbres d'entrée (7, 9).

2. Chaîne cinématique hybride selon la revendication 1, **caractérisée en ce que** le non-tissé (11) présente un jeu de roues dentées séparé de tous les rapports (G1 à G4), en d'autres termes un étage d'engrenage planétaire (31).

3. Chaîne cinématique hybride selon la revendication 1, **caractérisée en ce que** la roue dentée mobile (41) côté sortie du plan de roue (RE8) côté moteur électrique peut être couplée à l'arbre de sortie (13) pour un changement de vitesses au moyen d'un élément de changement de vitesses (G4) associé.

4. Chaîne cinématique hybride selon l'une quelconque des revendications précédentes, **caractérisée en ce que** le premier engrenage partiel (I) et le deuxième engrenage partiel (II) sont disposés côte à côte dans la direction axiale, et que le premier engrenage partiel (I) est tenu à distance axialement du double embrayage (K1, K2) en intercalant le deuxième engrenage partiel (II), et/ou que l'un (7) des arbres d'entrée (7, 9) est un arbre plein, qui est disposé de manière coaxiale à l'intérieur du deuxième arbre d'entrée (9) réalisée en tant qu'arbre creux.

5. Chaîne cinématique hybride selon la revendication 4, **caractérisée en ce que** l'arbre de sortie (13) se prolonge en un prolongement axial au-delà du premier engrenage partiel (I) avec une pièce d'extrémité (23), sur laquelle siège l'élément de changement de vitesses (S) côté moteur électrique, et que la pièce d'extrémité (23) est couplée au moteur électrique (5) dans la première position de changement de vitesses (S1) de l'élément de changement de vitesses (S) côté moteur électrique.

6. Chaîne cinématique hybride selon l'une quelconque des revendications précédentes, **caractérisée en ce que** l'élément de changement de vitesses (S) côté moteur électrique est disposé en alignement axial entre le plan de roue (RE8) côté moteur électrique et le non-tissé (11) du moteur électrique (5), et/ou que tous les plans de roue (RE1 à RE8) sont disposés les uns derrière les autres axialement dans l'engrenage à double embrayage (3), et que le double embrayage (K1, K2) est disposé sur une extrémité d'engrenage axialement extérieure et le moteur électrique (5) est disposé sur l'extrémité d'engrenage extérieure axialement opposée.

7. Chaîne cinématique hybride selon l'une quelconque des revendications précédentes, **caractérisée en ce que** le moteur électrique (5) est disposé par son arbre de moteur électrique (25) de manière coaxiale par rapport à l'arbre de sortie (13).

8. Chaîne cinématique hybride selon l'une quelconque des revendications précédentes, **caractérisée en ce que** le non-tissé (11) présente un étage d'engrenage planétaire (31) avec une roue solaire (33) ainsi qu'une couronne (35) radialement extérieure et des roues planétaires (39) intercalées.

9. Chaîne cinématique hybride selon les revendications 5 et 7 ou 5, 7 et 8, **caractérisée en ce que** l'arbre de moteur électrique (25) est un arbre creux qui est monté de manière coaxiale sur l'arbre de sortie (13), à savoir sur sa pièce d'extrémité (23).

10. Chaîne cinématique hybride selon la revendication 8 et 9, **caractérisée en ce que** la roue solaire (33) est disposée de manière solidaire en rotation sur l'arbre de moteur électrique (25), et la couronne (35) radialement extérieure est disposée de manière solidaire au boîtier, et que dans la première position de changement de vitesses (S1) de l'élément de changement de vitesses (S) côté moteur électrique, une entretoise (37) supportant les roues planétaires (39) est couplée à l'arbre de sortie (13), et que dans la deuxième position de changement de vitesses (S2) de l'élément de changement de vitesses (S) côté moteur électrique, l'entretoise (37) supportant les roues planétaires (39) est couplée à la roue dentée mobile (41) côté sortie du plan de roue (RE8) côté moteur électrique.
